Europäisches Patentamt

European Patent Office

Office européen des brevets

(11) Publication number : **0 683 390 A1**

# (12) EUROPEAN PATENT APPLICATION

(21) Application number : 95107592.8

(22) Date of filing : 18.05.95

(51) Int. Cl.⁶ : **G01N 27/333**

(30) Priority : **19.05.94 JP 105260/94**

(43) Date of publication of application :
**22.11.95 Bulletin 95/47**

(84) Designated Contracting States :
**DE FR GB IT**

(71) Applicant : **KYOTO DAIICHI KAGAKU CO.,
LTD.
57 Nishiaketa-cho
Higashikujo
Minami-ku
Kyoto-shi Kyoto-fu (JP)**

(72) Inventor : **Hamamoto, Katsumi, c/o Kyoto
Daiichi Kagaku Co.LTD
57, Nishiaketa-cho,
Higashikujo,
Minami-ku
Kyoto-shi, Kyoto-fu (JP)**
Inventor : **Okuda, Hisashi, c/o Kyoto Daiichi
Kagaku Co.LTD
57, Nishiaketa-cho,
Higashikujo,
Minami-ku
Kyoto-shi, Kyoto-fu (JP)**

(74) Representative : **Jönsson, Hans-Peter, Dr. et al
Patentanwälte
von Kreisler Selting Werner,
Bahnhofsvorplatz 1 (Deichmannhaus)
D-50667 Köln (DE)**

(54) Current detection type ion selective electrode.

(57) A current detection type ion selective electrode having a working electrode which has an ion selective part at one end of a hollow insulating body (1) having open ends and a lead wire (12) which is inserted in an interior of said hollow insulating body through the other end of the hollow insulating body and electrically contacted to the ion sensitive part (3) and functions as means for picking up a signal from the ion selective part, in which the ion sensitive part has a paste-form electrode made of a paste of electrically conductive particles containing an ionophore and a solvent therein, and a current detection type dry ion selective electrode having an electrode system including a measuring electrode and a counter electrode which are formed on an insulating substrate (5), in which the measuring electrode is the above paste-form electrode (13). Such electrode can be produced at a low cost and has a small impedance.

Fig. 3

Fig. 4

EP 0 683 390 A1

## BACKGROUND OF THE INVENTION

### Field of the Invention

The present invention relates to a current detection type ion selective electrode. In particular, the present invention relates to a current detection type ion selective electrode which uses an electrochemical sensor and can quantitatively analyze a specific substance contained in a test sample utilizing a polarization of a voltammetric electrochemical analysis method in a quick and simple manner.

### Description of the Related Art

As means for amperometrically detecting an ion concentration of a test solution, an electrode disclosed in Japanese Patent Publication No. 6658/1993 is known.

This electrode is a novel ion selective electrode which can detect an ion (or electron) transfer reaction at an interface between two immiscible electrolyte solutions, that is, an oil-water interface by a method analogous to a polarography or voltammetry. Since a response of a current is directly proportional to the ion concentration, this electrode can measure a concentration of a substance in a sample having a limited concentration range such as a body fluid with a better accuracy than a conventional potentiometric method.

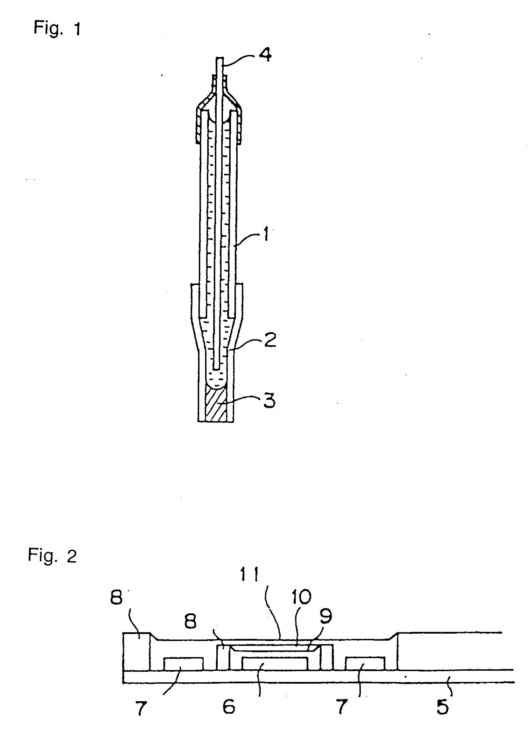

A structure of the above electrode is shown in Fig. 1. In this electrode, a silicone tube 2 is attached to a lower end of a glass tube 1, and an ion-sensitive part 3 is provided at the tip end of the silicone tube 2. The ion-sensitive part 3 is formed from a mixture of polyvinyl chloride as a polymeric material, nitrobenzene as a solvent and tetrabutylammonium tetraphenylborate as a supporting electrolyte. Then, as an inner liquid, a solution of tetrabutylammonium is filled in the interior of the glass tube 1 very carefully without disturbing a liquid surface of the ion-sensitive part 3. Then, a silver/silver chloride electrode 4 is inserted in the inner liquid to electrically communicate the liquid to outside. Thereby, a measuring electrode is assembled.

An ion selective electrode which is prepared by screen printing and an inner liquid layer and an ion-sensitive layer are made dry is described in Japanese Patent Application No. 13883/1993 (unpublished). This electrode has a structure of Fig. 2.

On an insulating substrate 5, a conductive material such as a silver paste or a carbon paste is screen printed to from a measuring electrode 6 and a counter electrode 7. Then, a resist ink is printed so that a formed insulating part 8 forms indent portions around the measuring electrode and the counter electrode. In the indent portions, a first electrolyte solution containing a hydrophilic polymer is coated and dried to form a first electrolyte layer 9. Over the first electrolyte layer 9, a hydrophobic polymer solution containing an ionophore and a supporting electrolyte, and dried to form an ion-sensitive layer 10. Thereafter, over the whole indent portions around the measuring electrode and counter electrode, a second electrolyte solution containing a hydrophilic polymer is coated and dried to form a second electrolyte layer 11, whereby an ion selective electrode is assembled.

Since the electrode disclosed in Japanese Patent Publication No. 6658/1993 contains liquid materials such as the inner liquid and the ion-sensitive part therein, when the electrode is declined or rolled, the inner liquid and the ion-sensitive part are mixed together, whereby the measurement is made impossible. That is, the handling of this electrode is difficult. In addition, after a long term storage, the inner liquid is evaporated so that a necessary level of sensitivity is not maintained. This electrode has insufficient long term stability.

Further, the assembling of this electrode is complicated and requires a high skill. As the result, the sensitivity greatly varies between the electrodes. Therefore, this type of electrode is not suitable for mass production and practical use. Since the electrode cannot be made smaller than below a certain size because of its structure, it requires a relatively large amount of a test sample. Accordingly, this electrode may not be used in a clinical test field in which the measurement should be done with a very small amount of the sample.

The dry type ion selective electrode described in unpublished Japanese Patent Application No. 13883/1993 can solve the above problems, and has improved handling property and a small size. Then, it can be used in the measurement using a vary small amount of the sample. But, this electrode still has a complicated structure, and requires complicated production steps. Then, its production technique has some problems, which increase the production cost. In addition, since the electrodes and the inner liquid layer are contacted, the storage stability of the electrode is deteriorated by the influence of water contained in the inner liquid layer. In addition, since an impedance of the electrode system including the inner liquid layer and the ion-sensitive layer is large, an influence of iR drop is large. Then, this dry type ion sensitive electrode may not be a best one.

## SUMMARY OF THE INVENTION

An object of the present invention is to provide a current detection type dry ion selective electrode which can solve the above problems.

According to a first aspect of the present invention, there is provided a current detection type ion selective electrode comprising a working electrode which comprises an ion selective part at one end of a hollow insulating body having open ends and a lead wire (e.g. a copper wire, a silver wire, or a platinum wire) which is inserted in an interior of said hollow insulating body through the other end of said hollow insulating body and electrically contacted to said ion sensitive part and functions as means for picking up a signal from said ion selective part, wherein said ion sensitive part comprises a paste-form electrode made of a paste of eclectically conductive particles containing an ionophore and a solvent therein.

According to a second aspect of the present invention, there is provided a current detection type dry ion selective electrode comprising an electrode system including a measuring electrode and a counter electrode which are formed on an insulating substrate, wherein said measuring electrode comprises the above paste-form electrode.

## BRIEF DESCRIPTION OF THE DRAWINGS

Fig. 1 is a cross sectional view of a conventional ion selective electrode.

Fig. 2 is a cross sectional view of a dry ion selective electrode disclosed in an unpublished Japanese Patent Application.

Fig. 3 is a schematic cross sectional view of an ion selective electrode according to the present invention.

Fig. 4 is a plan view of a dry ion selective electrode according to the present invention.

Fig. 5 is a cross sectional view of the electrode of Fig. 4 along the line A-A'.

Fig. 6 is a graph showing cyclic voltammetry when potassium ion concentrations in an aqueous solution are measured using the electrode of Fig. 5.

Fig. 7 is a graph showing the linearity of the results when the concentrations of potassium ion are measured using the dry ion selective electrode of Fig. 5.

Fig. 8 is a cross sectional view of the ammonium ion selective electrode used in Example 2.

Fig. 9 is a graph showing the linearity of the results when the concentrations of ammonium ion are measured using the dry ion selective electrode of Fig. 8.

Fig. 10 is a cross sectional view of the electrode for measuring urine used in Example 3.

Fig. 11 is a graph showing the linearity of the results when the concentrations of urine are measured using the electrode of Fig. 10.

## DETAILED DESCRIPTION OF THE INVENTION

The current detection type ion selective electrode of the present invention will be explained by making reference to the accompanying drawings.

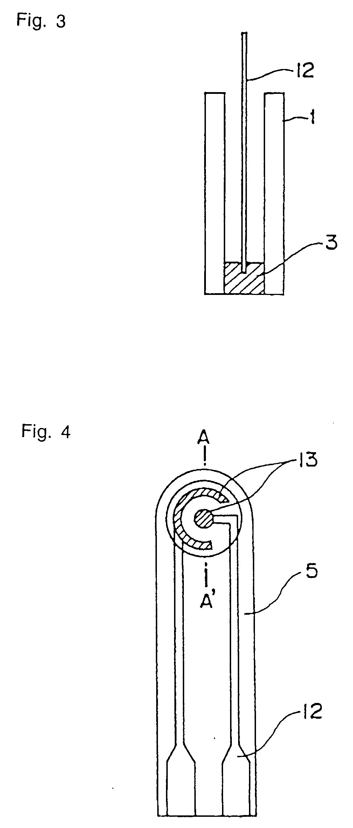

A first embodiment of the electrode of the present invention is shown in Fig. 3. This electrode can be assembled as follows:

At one end of a glass tube 1 as a hollow insulating body, an ion sensitive part 3 is filled. The ion sensitive part 3 consists of a paste comprising electrically conductive particles, an ionophore and a solvent. Optionally, the paste may contain an electron accepting compound and/or a binder. Then, a silver lead wire 12 is inserted through the glass tube, and its tip end is contacted to the ion sensitive part 3, whereby the ion sensitive part is electrically communicated with outside the electrode. An outer surface of the ion sensitive part 3 is polished with a paraffin paper and smoothed.

Since the ion selective electrode of the present invention has a simplified structure, its assembling does not require a high skill, and electrodes having the same sensitivity can be produced.

Since the inner liquid layer can be eliminated, there arises no disturbance of the liquid layer when the electrode is rolled or declined. Then, the electrode of the present invention has much improved handling properties.

As the electrically conductive particles, any of conventionally used electrically conductive particles such as graphite, carbon powder, etc. may be used.

An ionophore is also selected from conventionally used ones. Preferred examples of the ionophore are dibenzo-18-crown-6, dibenzo-15-crown-5, dibenzo-30-crown-10, biscrown ethers, nonactin, monactin, valinomycin, enniatin B, and their derivatives.

Preferred examples of the solvent are nitrobenzene, nitrophenyl octyl ether, nitrophenyl phenyl ether, fluoronitrodiphenyl ether, nitrophenyl dodecyl ether, dioctylphenyl phosphate, dioctyl phthalate, dioctyl sebacate, and diethylhexyl adipate, while other solvents may be used.

Preferred examples of the electron accepting compound are tetrabutylammonium tetraphenylborate, ferrocene, quinone compounds, and their derivatives.

As the binder, polyvinyl chloride, epoxy resin, neoprene, thermosetting resin, cellulose and the like are preferably used.

In the second embodiment of the present invention, the ion sensitive part is readily formed by a printing method.

According to the present invention, the ion selective electrode can be produced in one step without forming the first electrolyte layer 9, the ion sensitive layer 10 and the second electrolyte layer 11 as shown in Fig. 2. Then, the structure of the electrode is simplified, so that the electrode is produced economically.

Since a total thickness of the electrode is decreased, an impedance of the electrode system is lowered, and the electrochemical properties are improved.

Such current detection type dry ion selective electrode will be explained by making reference to the drawing.

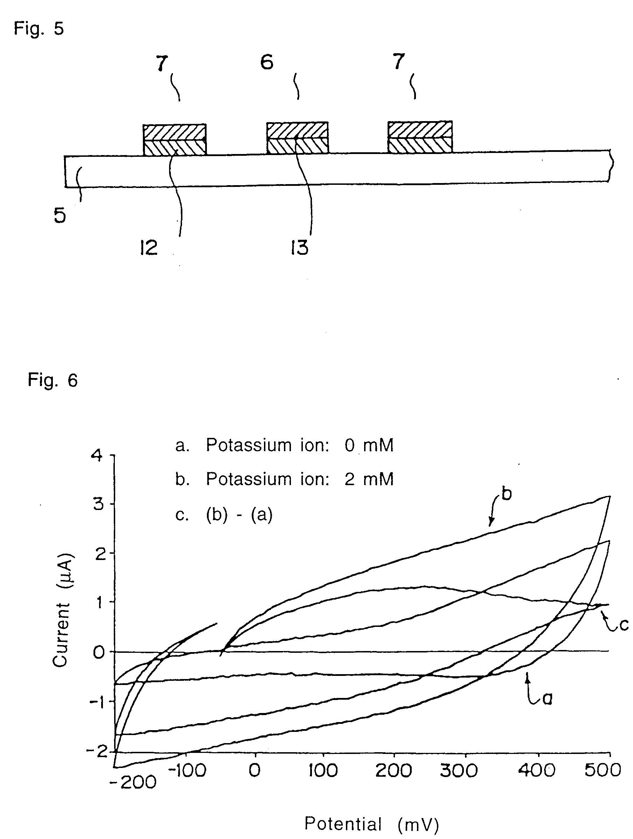

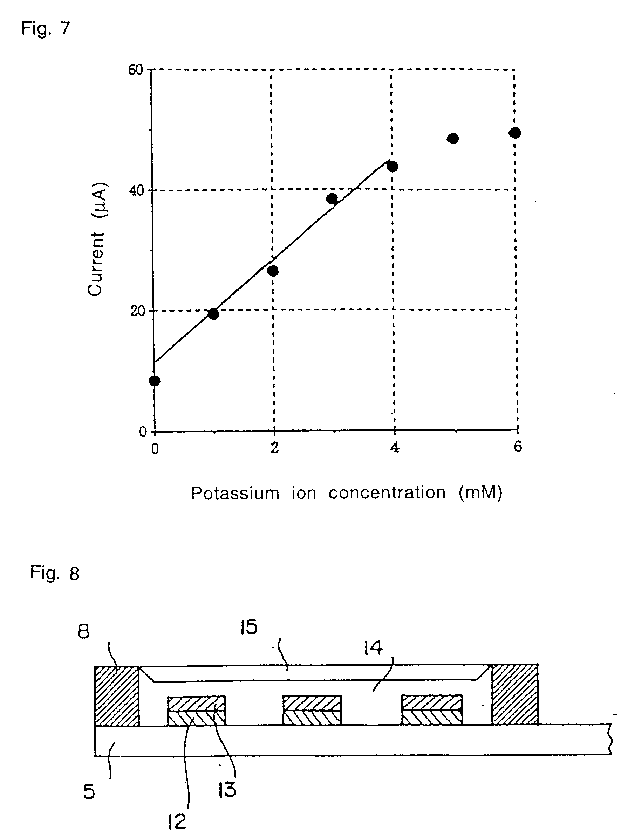

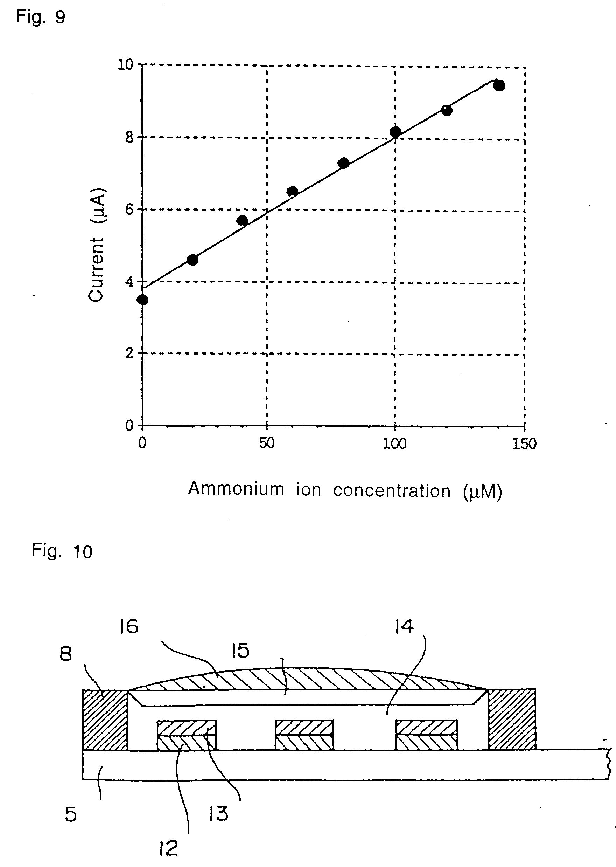

Fig. 4 is a plan view of a plate type electrode comprising the current detection type ion electrode of the present invention which is placed on an insulating substrate, Fig. 5 is a cross sectional view of the electrode of Fig. 4 along the line A-A', and Figs. 8 and 10 are cross sectional views of electrodes having different structures along a line corresponding to the line A-A' of Fig. 4.

This electrode can be produced as follows:

On an insulating substrate 5 which may be selected from the group consisting of polyethylene terephthalate, ceramics, fluoro-polymers such as Teflon (a trademark), and other plastics, a silver paste is printed at a suitable thickness, for example, 10 to 200 $\mu$m by screen printing, and dried by heating at a temperature from 70°C to 150°C for 3 to 30 minutes to form a silver lead wire 12 having a dry thickness of 1 to 50 $\mu$m. The drying temperature is arbitrarily selected depending on heat resistance of the used insulating substrate. As the silver paste, any of commercially available silver pastes may be used. A drying method depends on a kind of the silver paste. Then, the printed silver paste is dried by a method suitable for the used silver paste.

Then, a graphite paste a formulation of which will be described below is printed to a suitable thickness, for example, 10 to 200 $\mu$m by screen printing, and dried by heating at a temperature of 40 to 80°C for 3 to 30 minutes to form a graphite electrode 13 with a dry thickness of 1 to 50 $\mu$m which has ion sensitivity.

The graphite electrode 13 may be formed only on the measuring electrode 6, or on both of the measuring electrode 6 and the counter electrode 7 (see Fig. 5). When the electrode is formed in the former way, the silver lead wire 12 functions as a counter electrode.

Each of the silver lead wire and the graphite electrode may be formed by laminating two or more layers.

### Formulation of the graphite paste

| | |
|---|---|
| Graphite powder | 600 g |
| Polyvinyl chloride | 10 g |
| Dibenzo-15-crown-5 | 4.3 g |
| Tetrabutylammonium tetraphenylborate | 5.6 g |
| Nitrophenyl octyl ether | 400 ml |
| Tetrahydrofuran | 1000 ml |

The structure of the electrode of the present invention is not limited to that of Fig. 4. Electrodes having various structures can be formed by changing a pattern of a screen used in the screen printing, and the structure of the electrode can be freely designed according to the use of the electrode.

The production of an ammonium ion selective electrode based on the above described dry ion selective electrode will be explained.

Hereinafter, an assembling example of an ammonium ion selective electrode based on the above described dry ion selective electrode will be explained.

Around the counter electrode 7 of the dry ion selective electrode of Fig. 5, a liquid polymer resist is placed at a suitable thickness, for example, 10 to 500 μm by screen printing, and irradiated by UV light or heated to form an insulating part 8 as shown in Fig. 8. A dry thickness of this part is from 5 to 200 μm. As the polymer in the liquid polymer resist, any one of commercially available polymers may be used. Preferably, a resist comprising polyvinyl chloride is used.

Inside this insulating part 8, 3 to 20 μl of an electrolytic solution comprising a water-soluble polymer, a humectant, and an electrolyte is poured with, for example, a syringe and dried by heating at 40 to 80°C for 3 to 30 minutes to form an electrolyte layer 14.

In this step, the water-soluble polymer may be freely selected from conventional water-soluble polymers such as carboxymethylcellulose, polyvinyl alcohol, polyvinylpyrrolidone, methylcellulose, hydroxypropylcellulose, gelatin, starch, or a mixture thereof. As a humectant, glycerol, polyethylene glycol, hyaluronic acid, trehalose, and a mixture thereof may be used. As the electrolyte, an organic or inorganic compound which is used as an electrolyte in a buffer solution in a scientific experiment, or as an electrolyte in the electrochemical measurement may be used.

The electrolyte layer functions to convert vaporized ammonia to an ammonium ion.

Over the electrolyte layer 14, 3 to 20 μl of a hydrophobic polymer solution is poured, by for example, a syringe and dried by heating at 40 to 80°C for 3 to 30 minutes to form a hydrophobic polymer layer 15. As a main solid component in this solution, Nafion (trade name) of DuPont, cellulose acetate, polytetrafluoroethylene and its derivative, a silane compound and the like may be used. A solvent is selected according to the kind of the main solid component from, for example, alcohols, acetone, toluene, tetrahydrofuran, ethers, and so on.

The hydrophobic polymer layer 15 functions to vaporize the ammonium ions in the sample to the ammonia gas and pass it to the electrolyte layer 14.

Dry thicknesses of the electrolyte layer and the hydrophobic polymer layer depend on the concentration of the solid components and the amount of the poured solution, and are usually from 5 to 300 μm.

Over the dry ammonium ion selective electrode, an enzyme immobilized layer 16 can be formed as shown in Fig. 10. As the enzyme, any one that generates ammonia by a specific reaction can be used. Accordingly, by suitable selection of an enzyme, the following substances can be measured:

| Enzyme | Substance measured |
|---|---|
| Urease | Urine |
| Creatinine deimidase | Creatinine |
| Glutamic acid dehydrogenase | Glutamic acid |
| Leucine dehydrogenase | Leucine |
| Putrescine oxidase | Putrescine |

The enzyme immobilized layer 16 is formed by pouring 3 to 20 μl of a solution containing the above enzyme by, for example, a syringe and dried by heating at 40 to 80°C for 3 to 30 minutes. A dry thickness of this layer is preferably from 3 to 100 μm. This enzyme immobilized layer may be designed so that, after contacted to the sample, the layer is dissolved to proceed an enzymatic reaction. Alternatively, the enzyme is immobilized on a carrier, and the material to be measured diffuses in the support and contacts the immobilized enzyme, whereby the enzymatic reaction takes place. In the former case, the enzyme solution may contain a water-soluble polymer which is selected from carboxymethylcellulose, polyvinyl alcohol, polyvinylpyrrolidone, methylcellulose, hydroxypropylcellulose, gelatin, starch or a mixture thereof. In the latter case, the enzyme is generally immobilized on the carrier using glutaraldehyde. Further, the layer may contain a buffer to adjust pH of the sample to an optimum pH of the enzymatic reaction.

Examples

The present invention will be illustrated by the following examples.

Example 1

On an insulating substrate 5 made of polyethylene terephthalate, a silver paste was printed at a suitable thickness (50 to 200 μm) by screen printing, and dried by heating at 75°C for 30 minutes to form a silver lead wire 12 having a dry thickness of 5 to 20 μm.

Then, a graphite paste having the formulation described below was printed in the similar way to the case of the silver paste by screen printing, and dried by heating at a temperature of 50°C for 30 minutes to form a graphite electrode 13.

The graphite electrode 13 may be formed only on the measuring electrode 6, or on both of the measuring electrode 6 and the counter electrode 7. In this Example and Fig. 4, the latter way was employed.

Each of the silver lead wire and the graphite electrode may be formed by laminating two or more layers.

| Formulation of the graphite paste | |
|---|---|
| Graphite powder | 600 g |
| Polyvinyl chloride | 10 g |
| Dibenzo-15-crown-5 | 4.3 g |
| Tetrabutylammonium tetraphenylborate | 5.6 g |
| Nitrophenyl octyl ether | 400 ml |
| Tetrahydrofuran | 1000 ml |

Fig. 6 shows the cyclic voltammetry when the potassium ion concentration was measured using the above produced dry ion selective electrode.

As a supporting electrolyte, 10 mM magnesium chloride was used, and a voltage sweeping was carried out at a sweeping rate of 10 mV/sec. in a range between -200 mV and +500 mV.

Fig. 7 shows the linearity of the measured concentration of the potassium ion. The measurement was carried out by measuring a current value when a pulse voltage of +250 mV for 100 msec. was applied.

The dry ion selective electrode will have selectivity to other ions than potassium ion when a kind of the ionophore and an applied voltage are adequately selected.

Preferred combinations of the ions to be measured, the ionophores and the voltage are as follows:

| Ion | Ionophore | Voltage |
|---|---|---|
| Sodium | Dibenzo-18-crown-6 | +350 mV |
| Lithium | Phosphododecyl-14-crown-4 | +200 mV |
| Calcium | Cyclo(N',N'-dioctyl-D-asparaginyl-L-prolyl-L-alanyl-)$_2$ | +400 mV |

Example 2

A production example of an ammonium ion elective electrode based on the dry ion selective electrode of Example 1 is explained.

Around the counter electrode 7 of the dry ion selective electrode of Fig. 5, a liquid polymer resist was placed at a thickness of 300 μm by screen printing, and irradiated by UV light or heated to form an insulating part 8 having a thickness of 160 μm as shown in Fig. 8.

Inside this insulating part 8, 3 μl of an electrolytic solution comprising 50 mM magnesium chloride and 50 mM L-lysin dissolved in 0.25 % of carboxymethylcellulose and 0.2 % of glycerin (pH 8.5) was poured with, for example, a syringe and dried by heating at 50°C for 10 minutes to form an electrolyte layer 14.

Over the electrolyte layer 14, 3 μl of a hydrophobic polymer (Nafion) solution was poured and dried by heating at 40°C for 10 minutes to form a hydrophobic polymer layer 15.

The produced dry ion selective electrode generated the current which was proportional to the ammonium ion concentration as shown in Fig. 9.

Example 3

Over the dry ammonium ion selective electrode produced in Example 2, an enzyme immobilized layer 16 was formed as shown in Fig. 10. This enzyme immobilized layer was formed by pouring 3 to 10 µl of an enzyme solution comprising 100 U/ml of urease dissolved in a 100 mM Tris-hydrochloric acid buffer (pH of 8.5) containing 15 % bovine serum albumin and 3 % of glutaraldehyde, and dried by heating.

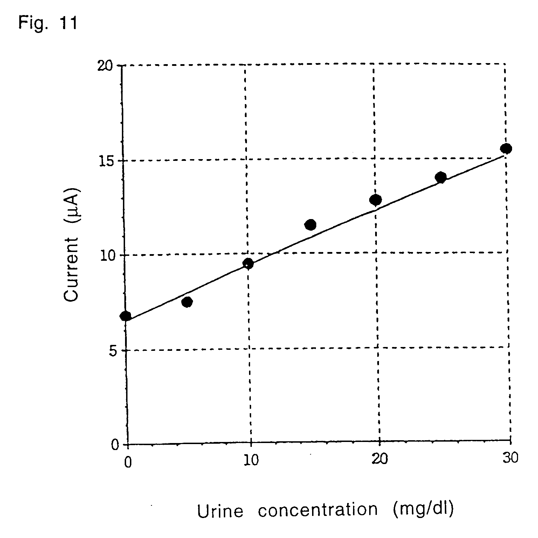

The produced electrode generated the current which was proportional to the concentration of urine as shown in Fig. 11.

**Claims**

1. A current detection type ion selective electrode comprising a working electrode which comprises an ion selective part at one end of a hollow insulating body having open ends and a lead wire which is inserted in an interior of said hollow insulating body through the other end of said hollow insulating body and electrically contacted to said ion sensitive part and functions as means for picking up a signal from said ion selective part, wherein said ion sensitive part comprises a paste-form electrode made of a paste of eclectically conductive particles containing an ionophore and a solvent therein.

2. A current detection type dry ion selective electrode comprising an electrode system including a measuring electrode and a counter electrode which are formed on an insulating substrate, wherein said measuring electrode comprises a paste-form electrode made of a paste of eclectically conductive particles containing an ionophore and a solvent therein.

3. The current detection type ion selective electrode according to claim 1 or 2, wherein said electrically conductive particles are graphite or carbon powder.

4. The current detection type ion selective electrode according to claim 1 or 2, wherein said paste-form electrode contains an electron accepting compound and a binder in addition to said ionophore.

5. The current detection type ion selective electrode according to claim 1 or 2, wherein said ionophore is at least one compound selected from the group consisting of dibenzo-18-crown-6, dibenzo-15-crown-5, dibenzo-30-crown-10, biscrown ethers, nonactin, monactin, valinomycin, enniatin B, and their derivatives.

6. The current detection type ion selective electrode according to claim 1 or 2, wherein said solvent is at least one solvent selected from the group consisting of nitrobenzene, nitrophenyl octyl ether, nitrophenyl phenyl ether, fluoronitrodiphenyl ether, nitrophenyl dodecyl ether, dioctylphenyl phosphate, dioctyl phthalate, dioctyl sebacate, and diethylhexyl adipate.

7. The current detection type ion selective electrode according to claim 4, wherein said electron accepting compound is at least one compound selected from the group consisting of tetrabutylammonium tetraphenylborate, ferrocene, quinone compounds, and their derivatives.

8. The current detection type ion selective electrode according to claim 4, wherein said binder is at least one polymer selected from the group consisting of polyvinyl chloride, epoxy resin, neoprene, thermosetting resin and cellulose.

9. The current detection type ion selective electrode according to claim 2, which further comprises an electrolyte layer containing a hydrophilic polymer on said electrode system, and a hydrophobic polymer layer over said electrolyte layer.

10. The current detection type ion selective electrode according to claim 9, which further comprises a layer which is formed by solidifying a solution containing an enzyme, over said hydrophobic polymer layer.

Fig. 1

Fig. 2

Fig. 3

Fig. 4

Fig. 5

Fig. 6

a. Potassium ion: 0 mM

b. Potassium ion: 2 mM

c. (b) - (a)

Fig. 7

Fig. 8

Fig. 9

Fig. 10

Fig. 11

European Patent Office

**EUROPEAN SEARCH REPORT**

Application Number

| | DOCUMENTS CONSIDERED TO BE RELEVANT | | EP 95107592.8 |
|---|---|---|---|

| Category | Citation of document with indication, where appropriate, of relevant passages | Relevant to claim | CLASSIFICATION OF THE APPLICATION (Int. Cl. 6) |
|---|---|---|---|
| Y | <u>ES - A - 2 009 413</u> (UNIVERSITAT AUTONOMA DE BARCELONA) * Totality * | 1-10 | G 01 N 27/333 |
| Y | DATABASE WPIL, no. 90-005 461, DERWENT PUBLICATIONS LTD., London; & KR-B-8 901 551 (LEE, Y.) * Abstract * | 1-10 | |
| Y | SOVIET INVENTIONS ILLUSTRATED, E1 section, week K08, April 6, 1983 DERWENT PUBLICATIONS LTD., London; & SU-A-920 499 (LENINGRAD ZHDANOV UNIV (MOGU)) | 1-10 | |
| | | | TECHNICAL FIELDS SEARCHED (Int. Cl. 6) |
| | | | G 01 N |

The present search report has been drawn up for all claims

| Place of search | Date of completion of the search | Examiner |
|---|---|---|
| VIENNA | 19-07-1995 | NARDAI |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)